Europäisches Patentamt

(19) **European Patent Office**

**Office européen des brevets**

(11) Numéro de publication: **0 051 510**
**B1**

# (12) FASCICULE DE BREVET EUROPEEN

(45) Date de publication du fascicule du brevet:
06.06.84

(51) Int. Cl.³: **G 02 B 7/26**

(21) Numéro de dépôt: **81401581.4**

(22) Date de dépôt: **13.10.81**

(54) Dispositif de positionnement de fibres optiques dans une pièce formant embout destinée au raccordement de deux câbles de transmission par fibres optiques.

(30) Priorité: **03.11.80 FR 8023464**

(43) Date de publication de la demande:
**12.05.82 Bulletin 82/19**

(45) Mention de la délivrance du brevet:
**06.06.84 Bulletin 84/23**

(84) Etats contractants désignés:
**BE CH DE GB IT LI NL SE**

(56) Documents cités:
**EP - A - 0 036 369**
**FR - A - 2 420 777**
**US - A - 4 110 000**

(73) Titulaire: **LIGNES TELEGRAPHIQUES ET TELEPHONIQUES L.T.T., 1, rue Charles Bourseul, F-78702 Conflans-Ste-Honorine (FR)**

(72) Inventeur: **Hulin, Jean-Pierre, THOMSON-CSF SCPI 173, bld Haussmann, F-75360 Paris Cedex 08 (FR)**
Inventeur: **Bouvard, André, THOMSON-CSF SCPI 173, bld Haussmann, F-75360 Paris Cedex 08 (FR)**
Inventeur: **Lemaitre, Patrik, THOMSON-CSF SCPI 173, bld Haussmann, F-75360 Paris Cedex 08 (FR)**

(74) Mandataire: **Benoit, Monique et al, THOMSON-CSF SCPI 173, Bld Haussmann, F-75379 Paris Cedex 08 (FR)**

## Description

La présente invention concerne un dispositif de positionnement de fibres optiques faisant saillie de l'extrémité d'un câble de transmission par fibres optiques dans des rainures longitudinales pratiquées sur le pourtur d'une pièce formant embout destinée à être fixée dans le prolongement de l'extrémité du câble en vue de permettre le raccordement de ce dernier avec un câble similaire. Chacun des deux câbles de transmission par fibres optiques est du type comportant, sous une enveloppe de protection, un support cylindrique diélectrique armé le long de son axe et creusé de rainures, soit longitudinales, soit hélicoïdales, régulièrement disposées sur son pourtour, et dans chacune desquelles est logée une fibre optique.

On connaît déjà des procédés et des dispositifs permettant de réaliser un raccordement ou épissure de tels câbles de transmission par fibres optiques. On se reportera par exemple à la demande de brevet français déposée au nom de la Demanderesse le 24 mars 1978 et publiée sous le numéro 2 420 777, concernant: »Procédé et appareillage de raccordement de câbles à fibres optiques«. Selon ce brevet, le procédé de raccordement de deux câbles de transmission par fibres optiques comporte les étapes suivantes effectuées sur chaque extrémité de câble:

— on dénude les extrémités des câbles sur une longueur prédéterminée;
— on écarte vers l'extérieur les fibres ainsi dégagées et on les fixe provisoirement sur un support entourant le câble;
— on coupe perpendiculairement à son axe le support débarrassé de ses fibres et on y fixe rigidement une pièce formant embout prolongateur, creusée de rainures régulièrement disposées sur son pourtour, et pratiquées au même écartement angulaire que les rainures du support dudit câble;
— on rabat les fibres dans les rainures de cet embout et on les y fixe rigidement;
— on coupe perpendiculairement à son axe cet embout ainsi que les fibres qu'il porte et on polit ledit embout;
— on fixe à demeure chacun des assemblages support-embout par des moyens de rigidification;
— on met en contact les deux faces de coupe et on aligne les deux câbles par des moyens d'alignement; et
— on applique les deux faces de coupe l'une contre l'autre sous pression par des moyens de serrage appropriés.

Cependant, l'opération du procédé décrit ci-dessus consistant à rabattre les fibres, par exemple à l'aide d'une pince, notamment du type brucelles, dans les rainures de la pièce formant embout prolongateur, présente un certain nombre d'inconvénients. En effet cette opération est effectuée manuellement, mettant donc à contribution la dextérité de l'opérateur. Ainsi, il peut arriver par maladresse que deux fibres optiques soient positionnées dans une même rainure de l'embout prolongateur. Dès lors, on ne peut garantir une parfaite exécution de cette opération de positionnement d'une fibre optique dans chaque rainure de la pièce formant embout. En outre, cette opération peut requérir une sollicitation relativement importante de la fibre optique afin de la positionner dans une rainure, pouvant même provoquer une cassure de ladite fibre. De plus, cette opération est relativement longue à exécuter, ce qui augmente notablement le temps de raccordement, notamment sur chantier, de deux câbles de transmission par fibres optiques.

La présente invention a pour but de remédier à ces inconvénients en proposant un dispositif mécanique de positionnement de fibres optiques dans des rainures de la pièce formant embout destinée au raccordement de deux câbles de transmission par fibres optiques du type décrit précédemment, qui est entièrement satisfaisant, d'une structure simple, fiable, et assurant un positionnement rapide et rigoureux d'une seule fibre optique par rainure, éliminant ainsi les facteurs humains.

A cet effet, l'invention a pour objet un dispositif de positionnement de fibres optiques faisant saillie de l'extrémité d'un câble de transmission par fibres optiques dans des rainures longitudinales pratiquées sur le pourtour d'une pièce formant embout destinée à être fixée dans le prolongement de l'extrémité du câble en vue de permettre le raccordement de ce dernier avec un câble similaire, caractérisé en ce qu'il comporte:

— une pièce d'insertion des fibres optiques comprenant un évidement central ménagé sensiblement sur toute sa longueur, et des fentes radiales pratiquées sur le pourtour de la pièce d'insertion et s'étendant sensiblement sur toute la longueur de cette pièce d'insertion, le nombre des fentes étant choisi égal au nombre des rainures de la pièce formant embout, et les fentes étant réparties sensiblement suivant le même écartement angulaire que celui des rainures, la pièce formant embout étant destinée à être emmanchée dans l'évidement central de telle sorte que chacune de ses rainures soit disposée en regard d'une fente de la pièce d'insertion; et
— des moyens de distribution des fibres optiques montés librement en rotation autour de la pièce d'insertion et présentant une fente longitudinale supplémentaire destinée à venir successivement en regard de chaque fente de la pièce d'insertion, les fibres optiques étant présentées une à une à la fente supplémentaire des moyens de distribution de sorte que, par rotation des moyens de distribution, chaque fibre optique pénètre dans une rainure de la pièce formant embout à travers la fente des moyens de distribution venue en regard d'une fente de la pièce d'insertion.

Selon une autre caractéristique de l'invention, les moyens de distribution comportent une bague montée en butée sur une extrémité de la pièce d'insertion, les fibres optiques étant disposées en appui sur le pourtour extérieur de la bague.

On comprend qu'ainsi, une fois l'extrémité du câble dénudée sur une longueur prédéterminée, les fibres optiques ainsi dégagées viendront s'épanouir autour de la bague qui présentera successivement, par rotation, sa fente à chaque fibre optique, de sorte que ladite fibre descendra dans une fente de la pièce d'insertion et viendra aisément se positionner dans une rainure de la pièce formant embout. Ainsi, cette bague tournante de distribution de fibres optiques constitue un moyen simple, efficace, et facilitant notablement l'opération de positionnement de chaque fibre optique dans une rainure de la pièce formant embout.

D'autres caractéristiques et avantages de l'invention apparaîtront mieux dans la description détaillée qui suit et se réfère aux dessins annexés donnés uniquement à titre d'exemple et dans lesquels:

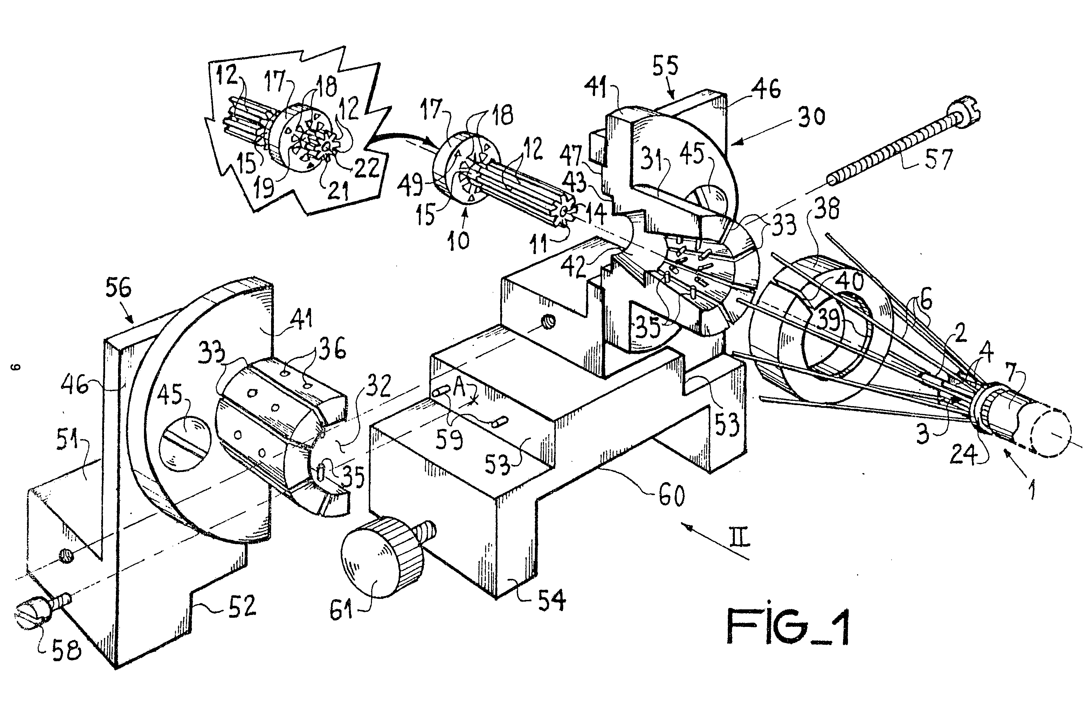

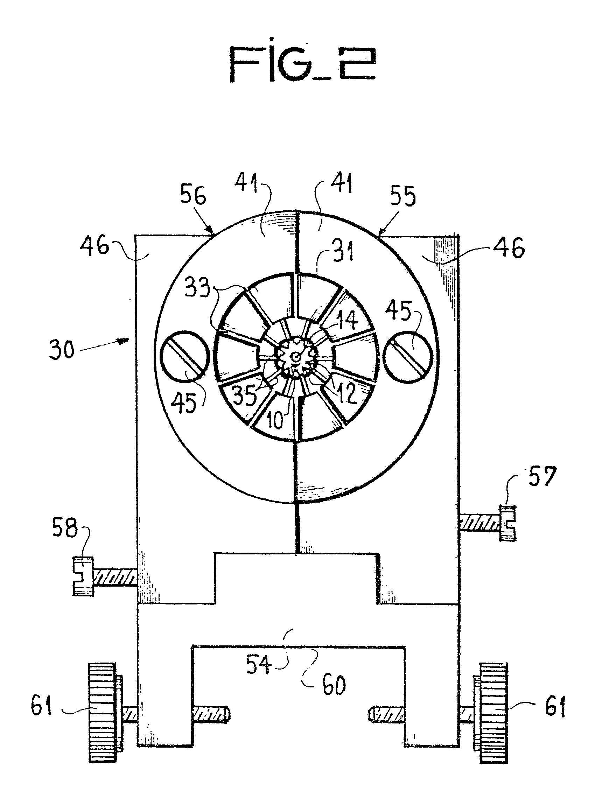

la fig. 1 représente une vue en perspective, avec éclatement, du dispositif de positionnement selon l'invention, avec le câble de transmission destiné à être raccordé, et avec l'embout prolongateur dont les deux parties extrêmes sont représentées séparément;et la fig. 2 est une vue selon la flèche II de la fig. 1, les pièces du dispositif selon l'invention étant assemblées, avec l'embout prolongateur emmanché dans la pièce d'insertion du dispositif.

Suivant un exemple de réalisation, et en se reportant à la fig. 1, on a représenté en l'extrémité d'un câble de transmission par fibres optiques destiné à être raccordé à un autre câble identique (non représenté). Cet élément de câble 1 comporte une armature ou âme centrale 2 destinée à rigidifier le câble et à absorber les contraintes longitudinales, autour de laquelle est disposé un support ou jonc cylindrique diélectrique 3 pourvu de rainures 4, longitudinales ou hélicoïdales, à profil par exemple en forme de V, et distribuées uniformément sur la surface externe du support 3. A l'intérieur de chaque rainure 4 est logée une fibre optique 6, et on a représenté en 7 l'enveloppe de protection du câble 1.

Pour réaliser un raccordement de deux câbles de transmission par fibres optiques du type représenté en 1 sur la figure 1, il est d'usage de procéder à une fixation rigide d'une pièce formant embout prolongateur tel que représenté en 10 avec le support 3 du câble. Cette pièce formant embout 10 comporte une première partie cylindrique 11 de même diamètre que le support 3, et munie de rainures 12 longitudinales, parallèles, de profil par exemple en forme de V, et distribuées uniformément sur le pourtour externe de la partie cylindrique 11 au même écartement angulaire que les rainures 4 du support 3 du câble. Cette première pièce cylindrique 11 comporte également un alésage central 14 pratiqué sur toute sa longueur, et destiné à recevoir l'armature centrale 2 du câble 1, comme on l'expliquera par la suite.

Cette pièce cylindrique 11 se termine par une première gorge circulaire 15 dont le diamètre, inférieur à celui de la partie cylindrique 11, est choisi légèrement supérieur au diamètre du cercle inscrit par les fonds des rainures, la profondeur des rainures au niveau de la partie cylindrique 11 étant identique à celles du support 3 du câble. Cette première gorge 15 se prolonge par une collerette 17 munie d'un évidement central (non représenté) ménagé sur toute sa longueur, et d'une pluralité d'ouvertures longitudinales 18, ménagées sur toute la longueur de la collerette 17, et régulièrement réparties autour dudit évidement, suivant le même écartement angulaire que les rainures 12 de la pièce cylindrique 11. Chaque ouverture 18 présente une forme en V dont la pointe est dirigée vers l'évidement. Ainsi, chaque ouverture 18 se trouve exactement dans le prolongement de chaque rainure 12 de la pièce cylindrique 11.

La collerette 17 est therminée par une seconde gorge circulaire 19, identique à la gorge 15, et de même diamètre que celle-ci. La gorge 19 se prolonge par une seconde partie cylindrique 21 identique à la partie cylindrique 11, c'est-à-dire de même diamètre, et rainurée au même écartement angulaire. La longueur de cette seconde partie cylindrique 21 est inférieure à celle de la partie 11, et comporte éventuellement un alésage central 22 de diamètre inférieur à celui de l'alésage 14 de la partie 11.

Avantageusement, cet embout prolongateur 10 est obtenu par moulage d'une pièce symétrique qui, par tronçonnage suivant son plan de symétrie, donne deux embouts apairés 10 qui seront respectivement fixés sur les deux extrémités des câbles à raccorder.

Comme on le voit bien sur la fig. 1, les premières opérations à effectuer pour le raccordement de deux câbles de transmission par fibres optiques, consistent tout d'abord à dénuder les extrémités des câbles 1 sur une longueur prédéterminée, à insérer un joint torique souple 24 autour du support 3, à écarter vers l'extérieur les fibres 6 ainsi dégagées, et à couper perpendiculairement à son axe le support 3 débarassé de ses fibres. L'opération suivante consiste à positionner et à maintenir les fibres optiques 6 dans les rainures 12 de l'embout prolongateur 10 et à les y fixer rigidement, puis à assembler l'embout prolongateur 10 avec le support 3 du câble.

L'opération décrite ci-dessus consistant à positionner les fibres optiques 6 dans les rainures 12 de la pièce formant embout 10 est exécutée par le dispositif selon l'invention que l'on va maintenant décrire.

Ce dispositif de positionnement 30 comporte une pièce cylindrique 31, de longueur sensiblement égale à celle de la première partie cylindrique 11 d e la pièce formant embout 10, et coaxialement alignée avec le câble 1. Cette pièce 31, destinée à assurer le positionnement des fibres dans les rainures de l'embout prolongateur 10, comporte un évidement central 32, de forme conique, ménagé sensiblement sur toute sa longueur, et une plural.té de fentes radiales 33, de largeur légèrement supérieure au diamètre des fibres optiques 6, s'étendant sensiblement sur toute la longueur de ladite pièce 31. Ces fentes 33 sont distribuées régulièrement sur la périphérie de la pièce cylindrique 31, et sont espacées au même écartement angulaire que les rainures 4 du support 3, et donc au même écartement angulaire que les rainures 12 et les ouvertures 18 de l'embout 10.

La pièce cylindrique 31 comporte également des picots métalliques 35 de même longueur, faisant radialement saillie vers l'intérieur de l'évidement 32 de la pièce cylindrique 31. Ces picots 35, distribués circulairement, et répartis par exemple en deux rangées sur la longueur de la pièce cylindrique 31, sont respectivement montés entre deux fentes 33. On a représenté en 36 les ouvertures ménagées dans la pièce 31 par lesquelles sont engagés les picots 35.

Les parties saillantes des picots 35 ainsi répartis définissent un passage central pour la partie cylindrique 11 de l'embout 10, et la longueur des picots est déterminée de manière que cette partie cylindrique 11 vienne sensiblement en contact avec lesdits picots. Ainsi, ces picots 35 constituent des moyens de maintien de la partie cylindrique 11 de l'embout 10, une fois celui-ci emmanché dans la pièce cylindrique 31, comme le montre la figure 2.

Le dispositif de positionnement 30 comporte également une bague souple 38, par exemple en matière plastique, dont l'alésage présente un épaulement 39 servant de butée lorsque la bague vient se positionner sur l'extrémité de la partie cylindrique 31. Cette bague 38, pourvue d'une fente longitudinale 40, de largeur légèrement supérieure au diamètre des fibres 6, est montée tournante sur la pièce cylindrique 31.

L'extrémité de la partie cylindrique 31, opposée à celle sur laquelle est montée la bague 38, est solidaire d'une pièce cylindrique formant monture 41 comportant une partie centrale creuse 42, conique, jouant le rôle de filière, et pratiquée dans le prolongement de l'évidement 32 de la pièce cylindrique 31. L'ensemble constitué par les deux évidements 32 et 42 a une profondeur sensiblement égale à la longueur de l'ensemble partie cylindrique 11-gorge 15 de l'embout 10. La partie creuse 42 se termine par un logement circulaire, de même diamètre que la collerette 17, et présentant un épaulement 43 servant de butée pour ladite collerette lorsque l'embout 10 est emmanché dans la pièce cylindrique 31.

L'ensemble constitué par les pièces 31 et 41 est fixé, par exemple au moyen de deux vis 45 montées dans la pièce 41, sur une plaque formant support 46. Cette plaque 46 comporte un logement circulaire central, de diamètre supérieur au logement de la partie 42, et présentant un épaulement 47 servant de butée.

On expliquera maintenant la manière d'utiliser le dispositif de positionnement qui vient d'être décrit.

Après avoir dénudé l'extrémité du câble 1 et coupé le support 3 débarrassé de ses fibres, le dispositif 30 est positionné de telle sorte que les fibres optiques 6 viennent régulièrement s'épanouir autour de la bague 38 montée sur la pièce cylindrique 31. La pièce formant embout 10 est ensuite emmanchée dans la pièce cylindrique 31, c'est-à-dire avec sa collerette 17 venant en butée sur l'épaulement 43 et sa partie cylindrique 11 venant se positionner dans l'évidement central 32 (fig. 2). Les rainures 12 de la partie cylindrique 11 de l'embout sont respectivement mises en regard avec les fentes 33 au moyen d'éléments d'indexation 49, constitués par exemple par trois encoches de forme triangulaire ménagées dans la collerette 17 de l'embout 10.

Par rotation de la bague 38, et par mise en regard de sa fente 40 avec chaque fente 33 de la pièce cylindrique 31, chaque fibre optique 6 pénètre successivement dans ladite fente 40, puis traverse une fente 33 de la pièce 31. Chaque fibre 6 vient ensuite se positionner dans une rainure 12 de l'embout 10, tout en étant guidé au cours de sa descente par deux picots adjacents 35. Ainsi, la bague tournante fendue 38 joue le rôle de distributeur de fibres, permettant dès lors de s'assurer qu'une seule fibre 6 vient se positionner dans une rainure 12 de la pièce formant embout 10.

Comme il apparaît sur la figure 1, la plaque formant support 46 comporte une partie inférieure formant embase 51 pourvue d'un décrochement 52 venant en butée sur un épaulement 53 pratiqué sur une pièce formant socle 54.

Comme il apparaît sur la figure 1, l'ensemble constitué par les pièces 31, 41, et 46 forme une même pièce réalisée en deux parties identiques repérées en 55 et 56. Ces deux parties de pièces 55 et 56 peuvent être assemblées par tout moyen de fixation approprié, tel que par exemple une vis 57. La partie de pièce 55 est rendue solidaire du socle 54 par tout moyen approprié, tandis que l'autre partie de pièce 56 peut être retirée, par translation, dudit socle 54, au moyen de tout système approprié, tel que par exemple une vis 58 logée dans l'embase 51 de la pièce 56, et venant en butée en A sur l'épaulement 53 du socle 54. On a représenté en 59 deux tétons permettant d'accrocher la partie de pièce 56 au socle 54.

Le socle 54 comporte à sa partie inférieure un décrochement 60 destiné à permettre l'insertion du dispositif de positionnement 30 sur un banc de raccordement, des moyens de fixation, tels que par exemple deux vis 61 logées de part et d'autre du socle 54, permettant de solidariser le dispositif 30 audit banc.

Une fois les fibres optiques 6 positionnées dans les rainures 12 de l'embout 10 comme décrit précédemment, le socle 54 est désolidarisé du banc de raccordement en desserrant les vis 61. Ensuite, on pousse le dispositif 30 en direction du câble 1, de sorte que les fibres 6 positionnées dans les rainures 12 de l'embout 10 pénètrent aisément, après passage dans la filière 42, dans les ouvertures 18 de la collerette 17. De plus, l'âme 2 du câble pénètre dans l'alésage 14 de l'embout 10, assurant ainsi une fixation dudit embout avec le câble. Après passage dans ces ouvertures 18, les fibres viennent se positionner dans les rainures de la partie cylindrique 21 de l'embout 10. On notera que l'évidement central 32 de la pièce cylindrique 31 est conique de manière à faciliter le positionnement des fibres dans les rainures 12 de l'embout 10 lorsque lesdites fibres ne sont pas toutes coupées à la même longueur.

Ensuite, les deux parties de pièces 55 et 56 sont déconnectées l'une de l'autre en desserrant la vis 57, et la pièce 56 est retirée du socle 54 par la vis en butée 58 imprimant un mouvement de translation à ladite pièce 56. Dès lors, le dispositif de positionnement 30 est retiré du banc de raccordement.

On fait ensuite coulisser le joint torique 24 le long du support 3 et de la partie cylindrique 11 de l'embout 10, de façon à appliquer les fibres 6 au fond des rainures en V, jusqu'à ce qu'il occupe sa place définitive dans la gorge 15 de l'embout. On colle l'embout 10 et le support 3. De l'autre côte de la collerette 17, on introduit un joint torique (non représenté) dans la gorge 19 de l'embout 10 de façon à appliquer l'extrémité libre des fibres au fond des rainures et on procède au collage des extrémités des fibres dans la gorge 19. Le joint torique occupant la gorge 19 est ensuite éliminé par tout moyen approprié, tel que par exemple une meule à double granulométrie supprimant le polissage des fibres. L'ensemble câble l'embout 10 est ensuite soumis à une rigidification.

Après avoir procédé de la même façon sur le deuxième câble destiné au raccordement, on procède à l'alignement et au maintien des deux embouts jouant le rôle de connecteurs.

On a donc réalisé suivant l'invention un dispositif de positionnement de fibres optiques dans une pièce formant embout, particulièrement simple, très efficace, et avantageux du point de vue temps de mise en oeuvre de cette opération de positionnement.

### Revendications

1. Dispositif de positionnement de fibres optiques (6) faisant saillie de l'extrémité d'un câble (1) de transmission par fibres optiques dans des rainures longitudinales (12) pratiquées sur le pourtour d'une pièce formant embout (10) destinée à être fixée dans le prolongement de l'extrémité du câble en vue de permettre le raccordement de ce dernier avec un câble similaire, caractérisé en ce qu'il comporte:

— une pièce d'insertion (31) des fibres optiques comprenant un évidement central (32) ménagé sensiblement sur toute sa longueur, et des fentes radiales (33) pratiquées sur le pourtour de la pièce d'insertion et s'étendant sensiblement sur toute la longueur de cette pièce d'insertion, le nombre des fentes (33) étant choisi égal au nombre des rainures (12) de la pièce formant embout (10), et les fentes (33) étant réparties sensiblement suivant le même écartement angulaire que celui des rainures (12), la pièce formant embout (10) étant destinée à être emmanchée dans l'évidement central (32) de telle sorte que chacune de ses rainures (12) soit disposée en regard d'une fente (33) de la pièce d'insertion; et

— des moyens de distribution (38) des fibres optiques montés librement en rotation autour de la pièce d'insertion (31) et présentant une fente longitudinale supplémentaire (40) destinée à venir successivement en regard de chaque fente (33) de la pièce d'insertion, les fibres optiques (6) étant présentées une à une à la fente supplémentaire (40) des moyens de distribution de sorte que, par rotation des moyens de distribution (38), chaque fibre optique (6) pénètre dans une rainure (12) de la pièce formant embout à travers la fente (40) des moyens de distribution venue en regard d'une fente (33) de la pièce d'insertion.

2. Dispositif selon la revendication 1, caractérisé en ce que les moyens de distribution comportent une bague (38) montée en butée sur une extrémité de la pièce d'insertion (31), les fibres optiques (6) étant disposées en appui sur le pourtour extérieur de la bague.

3. Dispositif selon l'une des revendications 1 et 2, caractérisé en ce qu'il comporte de plus des éléments de guidage (35) des fibres optiques montés respectivement entre deux fentes (33) de la pièce d'insertion (31) et faisant radialement saillie vers l'intérieur de l'évidement (32) de la pièce d'insertion, les éléments de guidage étant répartis autour de l'évidement de façon à laisser un passage central à la pièce formant embout (10) lors de son emmanchement dans l'évidement (32).

4. Dispositif selon la revendication 3, caractérisé en ce que les éléments de guidage sont constitués par au moins un groupe de picots (35) sensiblement de même longueur, deux picots adjacents d'un même groupe permettant ainsi de guider une fibre optique (6) pour son positionnement dans une rainure (12) de la pièce formant embout, après passage de la fibre dans une fente (33) de la pièce d'insertion.

5. Dispositif selon l'une des revendications 3 et 4, caractérisé en ce que les moyens de guidage (35) constituent des moyens de maintien de la pièce formant embout (10) disposée dans le passage central.

6. Dispositif selon l'une des revendications précédentes, caractérisé en ce que l'évidement central (32) est de forme sensiblement conique.

7. Dispositif selon l'une des revendications précédentes, caractérisé en ce que l'extrémité de la pièce d'insertion opposée à celle sur laquelle est montée la bague, est solidaire d'une pièce formant monture (41) comprenant une partie centrale creuse (42), sensiblement conique, ménagée sensiblement sur toute sa longueur, et pratiquée dans le prolongement de l'évidement (32) de la pièce d'insertion.

8. Dispositif selon la revendication 7, caractérisé en ce que la pièce formant monture (41) est fixée sur un support (46) monté sur un socle (54), et en ce que la pièce d'insertion (31), la pièce formant monture (41) et le support (46) forment une même pièce réalisée en deux parties (54, 55) identiques déconnectables l'une de l'autre, l'une des deux parties (54) de pièce étant rendue solidaire du socle (54).

9. Dispositif selon la revendication 8, caractérisé en ce que le support (46) comporte des moyens pour verrouiller (56) les deux parties (54, 55) de pièce entre elles.

10. Dispositif selon l'une des revendications précédentes, caractérisé en ce qu'il est destiné à permettre le positionnement de fibres optiques (6) faisant saillie d'un câble de transmission (1) comprenant une armature centrale (2) autour de laquelle est disposé un support diélectrique (3) muni de rainures (4) pratiquées sur son pourtour et dans chacune desquelles est logée une des fibres optiques (6), l'extrémité de chaque fibre faisant longitudinalement saillie de sa rainure de façon à permettre à chaque extrémité de fibre de venir se positionner dans une rainure (12) de la pièce formant embout (10) emmanchée dans la pièce d'insertion.

11. Dispositif selon la revendication 10, caractérisé en ce que les rainures (12) de la pièce formant embout (10) sont disposées au même écartement angulaire que les rainures (4) du support diélectrique (3) du câble.

**Patentansprüche**

1. Vorrichtung zur Positionierung von optischen Fasern (6), die aus dem Ende eines Lichtleiter-Übertragungskabels (1) herausstehen, in Längsrillen (12), die am Umfang eines Teiles angebracht sind, welches dazu bestimmt ist, ein Endstück (10) zu bilden, das dazu bestimmt ist, in der Verlängerung des Endes des Kabels befestigt zu werden, um den Anschluß desselben an ein gleiches Kabel zu ermöglichen, dadurch gekennzeichnet, daß sie enthält:

— ein Einführungsteil (31) zum Einführen der optischen Fasern, welches eine zentrale Aussparung (32) enthält, die im wesentlichen über seine gesamte Länge gebildet ist, und radiale Schlitze (33) aufweist, die über den Umfang des Einführungsteiles ausgebildet sind und sich im wesentlichen über die gesamte Länge dieses Einführungsteiles erstrecken, wobei die Anzahl der Schlitze (33) gleich der Anzahl von Rillen (12) des das Endstück (10) bildenden Teiles gewählt ist, wobei die Schlitze (33) im wesentlichen mit demselben Winkelabstand wie der der Rillen (12) verteilt sind und wobei das das Endstück (10) bildende Teil dazu bestimmt ist, in die zentrale Aussparung (32) derart eingeschoben zu werden, daß jede seiner Rillen (12) gegenüber einem Schlitz (33) des Einführungsteiles liegt; und

— Mittel (38) zur Verteilung der optischen Fasern und welche frei drehbeweglich um das Einführungsteil (31) montiert sind sowie einen zusätzlichen Längsschlitz (40) aufweisen, der dazu bestimmt ist, nacheinander in Gegenüberstellung zu jedem Schlitz (33) des Einführungsteiles gebracht zu werden, wobei die optischen Fasern (6) dem zusätzlichen Schlitz (40) der Verteilungsmittel nacheinander dargeboten werden, so daß durch Drehung der Verteilungsmittel (38) jede optische Faser (6) in eine Rille (12) des das Endstück bildenden Teiles durch den Schlitz (40) der Verteilungsmittel hindurch eindringt, welcher in Gegenüberstellung zu einem Schlitz (33) des Einführungsteiles gebracht wurde.

2. Vorrichtung nach Anspruch 1, dadurch gekennzeichnet, daß die Verteilungsmittel einen Ring (38) enthalten, der in Anlage an ein Ende des Einführungsteiles (31) angeordnet ist, wobei die optischen Fasern (6) am Außenumfang des Ringes in Anlage sind.

3. Vorrichtung nach Anspruch 1 oder 2, dadurch gekennzeichnet, daß sie ferner Führungselemente (35) zur Führung der optischen Fasern enthält, die jeweils zwischen zwei Schlitzen (33) des Einführungsteiles (31) angebracht sind und radial zur Außenseite der Aussparung (32) des Einführungsteiles abstehen, wobei die Führungselemente um die Aussparung herum derart verteilt sind, daß sie einen zentralen Durchgang für das das Endstück (10) bildende Teil bei seinem Einschieben in die Aussparung (32) freilassen.

4. Vorrichtung nach Anspruch 3, dadurch gekennzeichnet, daß die Führungselemente durch wenigstens eine Gruppe von Zapfen (35) gebildet sind, die im wesentlichen dieselbe Länge haben, wobei zwei benachbarte Zapfen einer selben Gruppe auf diese Weise die Führung einer optischen Faser (6) zu ihrer Positionierung in einer Rille (12) des das Endstück bildenden Teiles nach dem Durchgang der Faser in einem Schlitz (33) des Einführungsteiles gestatten.

5. Vorrichtung nach einem der Ansprüche 3 und 4, dadurch gekennzeichnet, daß die Führungsmittel (35) Mittel zum Halten des das Endstück (10) bildenden Teils bilden, welches in dem zentralen Durchgang angeordnet ist.

6. Vorrichtung nach einem der vorstehenden Ansprüche, dadurch gekennzeichnet, daß die zentrale Aussparung (32) im wesentlichen kegelförmig ist.

7. Vorrichtung nach einem der vorstehenden Ansprüche, dadurch gekennzeichnet, daß das Ende des Einführungsteiles, welches demjenigen gegenüberliegt, an welchem der Ring montiert ist, fest verbunden ist mit einem Teil, welches eine Halterung (41) bildet und einen zentralen hohlen Teil (42) im wesentlichen konischer Form enthält, der im wesentlichen über die gesamte Länge gebildet ist und in der Verlängerung der Aussparung (32) des Einführungsteiles angebracht ist.

8. Vorrichtung nach Anspruch 7, dadurch gekennzeichnet, daß das die Halterung (41) bildende Teil an einem Träger (46) befestigt ist, welcher an einem Sockel (54) montiert ist, und daß das Einführungsteil (31), das die Halterung (41) bildende Teil und der Träger (46) ein einziges Stück bilden, welches aus zwei gleichen Teilen (54, 55) besteht, die voneinander lösbar sind, wobei eines der beiden Teile (54) des Stücks fest mit dem Sockel (54) verbunden ist.

9. Vorrichtung nach Anspruch 8, dadurch gekennzeichnet, daß der Träger (46) Mittel (56) zur gegenseitigen Verriegelung der beiden Teile (54, 55) des Stückes umfaßt.

10. Vorrichtung nach einem der vorstehenden Ansprüche, dadurch gekennzeichnet, daß sie dazu bestimmt ist, die Positionierung von optischen Fasern (6) zu ermöglichen, welche aus einem Übertragungskabel (1) herausstehen, das eine zentrale Armierung (2) enthält, um welche herum ein dielektrischer Träger (3) angeordnet ist, welcher mit über seinen Umfang angebrachten Rillen (4) versehen ist, in die jeweils eine der optischen Fasern (6) eingelegt ist, wobei das Ende jeder Faser in Längsrichtung aus ihrer Rille derart heraussteht, daß jedes Ende einer Faser in eine Rille (12) des das Endstück (10) bildenden Teils eingelegt werden kann, welches in das Einführungsteil eingeschoben ist.

11. Vorrichtung nach Anspruch 10, dadurch gekennzeichnet, daß die Rillen (12) des das Endstück (10) bildenden Teils mit demselben Winkelabstand wie die Rillen (4) des dielektrischen Trägers (3) des Kabels angeordnet sind.

## Claims

1. Device for positioning optical fibers (6) projecting from the end of an optical fiber transmission cable (1) into the longitudinal grooves (12) formed on the periphery of a piece forming a connector (10) susceptible to be secured to the extension of the end of the cable in order to permit the connection of the latter with a similar cable, characterized in that it comprises:

— an optical fiber insertion piece (31) comprising a central recess (32) extending substantially across its whole length, and radial slots (33) formed about the periphery of the insertion piece and extending substantially across the entire length of said insertion piece, the number of slots (33) being selected to be equal to the number of grooves (12) of the piece forming a connector (10), and the slots (33) being distributed substantially at the same angular spacing as that of the grooves (12), the piece forming a connector (10) being susceptible to be inserted into the central recess (32) in such a manner that each of its grooves (12) is disposed in facing relationship with a slot (33) of the insertion piece; and

— optical fiber distribution means (38) mounted for free rotation about the insertion piece (31) and having a longitudinal additional slot (40) susceptible to be successively positioned in front of each slot (33) of the insertion piece, the optical fibers (6) being presented one by one to the additional slot (40) of the distribution means, in such a manner that by rotation of the distribution means (38) each optical fiber (6) penetrates into a groove (12) of the piece forming a connector through the slot (40) of the distribution means positioned in front of a slot (33) of the insertion piece.

2. Device according to claim 1, characterized in that the distribution means comprise a ring (38) mounted to bear against one end of the insertion piece (31), the optical fibers (6) being disposed to bear on the outer periphery of the ring.

3. Device according to any of claims 1 and 2, characterized in that it further comprises optical fiber guiding members (35) respectively mounted between two slots (33) of the insertion piece (31) and radially projection towards the inside of the recess (32) of the insertion piece, the guiding members being distributed about the recess in a manner to leave a central passage for the piece forming a connector (10) when it is engaged into the recess (32).

4. Device according to claim 3, characterized in that the guiding members are formed of at least one set of studs (35) of substantially the same length, two adjacent studs of a same set thus permitting to guide an optical fiber (6) to be positioned in a groove (12) of the piece forming a connector after the fiber has passed through a slot (33) of the insertion piece.

5. Device according to any of claims 3 and 4, characterized in that the guiding means (35) constitute means for holding the piece forming a connector (10) disposed within the central passage.

6. Device according to any of the preceding claims, characterized in that the central recess (32) is of substantially conical shape.

7. Device according to any of the preceding claims, characterized in that the end of the insertion piece opposite that on which the ring is mounted is joined with a piece forming a mount (41) and comprising a central hollow part (42) of substantially conical shape and substantially formed across its entire length, and formed in the extension of the recess (32) of the insertion piece.

8. Device according to claim 7, characterized in that the piece forming a mount (41) is secured on a carrier (46) mounted on a base (54) and in that the insertion piece (31), the piece forming a mount (41) and the carrier (46) form a single piece made of two parts (54, 55) which are identical and may be disconnected from each other, one of the two parts (54) of the piece being joined with the base (54).

9. Device according to claim 8, characterized in that the carrier (46) comprises means for locking (56) the two parts (54, 55) of the piece to each other.

10. Device according to any of the preceding claims, characterized in that it is susceptible to permit the positioning of optical fibers (6) projecting from a transmission cable (1) comprising a central sheath (2) about which a dielectric carrier (2) is arranged which is provided with grooves (4) formed about its periphery and in each of which one of the optical fibers (6) is received, the end of each fiber longitudinally projecting from its groove in a manner to permit each fiber end to be positioned in a groove (12) of the piece forming a connector (10) engaged into the insertion piece.

11. Device according to claim 10, characterized in that the grooves (12) of the piece forming a connector (10) are arranged with the same angular spacing as the grooves (4) of the dielectric carrier (4) of the cable.

FIG_1

# FIG_2